# EUROPÄISCHE PATENTANMELDUNG

(11) **EP 2 957 254 A1**
(43) Veröffentlichungstag der Anmeldung: **23.12.2015**
(21) Anmeldenummer: 14173051.5
(22) Anmeldetag: 18.06.2014
(51) Int. Cl.: A61C 7/08

(54) **Verfahren zur Herstellung kieferorthopädischer Zahnschienen**

(71) Anmelder: Polzar, Gerhard, 63654 Büdingen (DE)
(72) Erfinder: Polzar, Gerhard, 63654 Büdingen (DE)
(74) Vertreter: Metten, Karl-Heinz

(57) **Zusammenfassung**

Die vorliegende Erfindung betrifft ein Verfahren zur Herstellung einer Vielzahl an kieferorthopädischen Zahnschienen, umfassend die Schritte:
a) 3D-Röntgen von Zähnen und zugehörigen Zahnhalteapparaten oder Teilen davon von Unterkiefer und/oder Oberkiefer in einem Ausgangszustand unter Erhalt eines digitalen 3D-Datensatzes, umfassend einen 3D-Voxelsatz,
b) Speichern dieses digitalen 3D-Datensatzes auf einem Speichermedium,
c) Verarbeiten dieses digitalen 3D-Datensatzes oder eines Teils davon unter computergestützter Generierung eines virtuellen dreidimensionalen Ausgangszustandsmodells Mᵢ mit i = 1, umfassend einen Teil oder sämtliche der dem 3D-Röntgen gemäß Schritt a) unterzogenen Zähne, insbesondere samt der jeweils zugehörigen Zahnwurzeln, von Ober- oder Unterkiefer,
d) computergestütztes Generieren eines virtuellen dreidimensionalen Zielzustandsmodells Mᵢ mit i = n, wobei n eine natürliche Zahl ist mit n > 1, umfassend einen Teil oder sämtliche der dem 3D-Röntgen gemäß Schritt a) unterzogenen Zähne von Oberoder Unterkiefer unter Verwendung des gemäß Schritt c) erhaltenen virtuellen dreidimensionalen Ausgangszustandsmodells M₁,
e) computergestütztes Generieren einer Serie an Zwischienzustandsmodellen Mᵢ mit i = 2 bis n-1, unter Verwendung des gemäß Schritt c) eines virtuellen dreidimensionalen Ausgangszustandsmodells M₁ und des gemäß Schritt d) erhaltenen virtuellen dreidimensionalen Zielzustandsmodells Mₙ, wobei aufeinander folgende Zustandsmodelle Mᵢ jeweils eine inkrementelle Änderung mindestens eines Zahns in Richtung auf das Zielzustandsmodell Mₙ umfassen,
f) computergestütztes Generieren von zu den Zustandsmodellen Mᵢ, i = 2 bis n, korrespondierenden eines virtuellen dreidimensionalen Zahnschienenmodellen Zᵢ, umfassend eine Vorderseiten- und eine Rückseitenwandung und ein die Vorderseiten- und die Rückseitenwandung verbindendes Auflageelement,
g) computergestütztes Herstellen von, insbesondere transparenten, zahnschienen ZSᵢ auf Basis der virtuellen dreidimensionalen Zahnschienenmodelle Zᵢ mittels Rapid Prototyping.

## Beschreibung

Die vorliegende Erfindung betrifft ein Verfahren zur Herstellung kieferorthopädischer Zahnschienen. Ferner betrifft die Erfindung die nach diesem Verfahren erhältlichen Zahnschienen.

Zahnfehlstellungen werden unabhängig von ihrer Entstehungsgeschichte häufig aus medizinischen wie auch aus kosmetischen Gründen als nicht dauerhaft hinnehmbar empfunden. Schon seit sehr langer Zeit gibt es Techniken, um Zahnfehlstellungen zu korrigieren. Ein nicht zu unterschätzendes Problem ist dabei unter anderem, dass eine korrigierte Zahnstellung das Bestreben zeigt, in Richtung der Zahnfehlstellung zurückzuwandern, wenn nicht anderweitige kieferorthopädische Maßnahmen getroffen werden. Ein weiteres Problem, das sich bei der kieferorthopädischen Regulierung der Zahnfehlstellung ergeben kann, ist eine Schädigung der Zahnwurzeln und/oder des umgebenden Gewebes bewegter Zähne, die allerdings vielfach erst längere Zeit nach Abschluss der kieferorthopädischen Behandlung zutage tritt. Problematisch ist somit, dass diese mitunter folgenschweren Behandlungsverläufe selbst für den Fachmann nicht sogleich erkennbar sind mit der Folge, dass die kieferorthopädische Zahnregulierung bis zu der gewünschten Zielstellung der Zähne fortgesetzt wird. Darüber hinaus kann es vorkommen, dass bereits im Laufe der kieferorthopädischen Zahnregulierung insbesondere die Zahnwurzeln und auch der Kieferknochen im Bereich bewegter Zähne durch die bei der Zahnregulierung wirkenden Kräfte nachhaltig und zumeist irreparabel in Mitleidenschaft gezogen werden. Auch dieses wird nicht selten während der eigentlichen kieferorthopädischen Behandlung nicht registriert.

Die mitunter fatalen Folgen für den Patienten stellen sich dabei unabhängig davon ein, ob man die Zahnregulierung über festsitzende metallische Brackets, die über einen oder mehrere Drähte miteinander verspannt sind, sogenannte Zahnspangen, oder über herausnehmbare Kunststoffschienen vornimmt.

Ein relativ modernes Verfahren zur Regulierung einer Zahnfehlstellung wird zum Beispiel in der DE 698 18 045 T2 beschrieben. Bei diesem Verfahren zur Repositionierung von Zähnen von einer anfänglichen Zahnanordnung zu einer Zielzahnanordnung werden die betroffenen Zähne inkrementell, das heißt schrittweise mit einer Serie an aufeinander abgestimmten Zahnschienen bewegt. Dieses Verfahren wird in der Fachwelt auch als Aligner-Therapie bezeichnet. Um zu geeigneten Zahnschienen zu gelangen, empfiehlt die DE 698 18 045 T2, von den Zähnen des Patienten vor Beginn der eigentlichen Behandlung einen Gipsabdruck zu erzeugen, welcher sodann genutzt wird, um mittels geeigneter Scan-Techniken zu einer digitalen Darstellung der Zähne zu gelangen. Ferner sollen vermittels eines sogenannten Wachsbisses die Gipsabdrücke von oberer und unterer Zahnreihe des Patienten relativ zueinander in eine zentrische Okklusionsposition anordenbar sein. Mithilfe dieser Modelle sowie des mittels Scannen gewonnen digitalen Datensatzes der anfänglichen Zahnstellung werden gemäß der DE 698 18 045 D2 digitale Datensätze sowohl für die Zielanordnung wie auch für die Vielzahl an inkrementellen Zwischenzahnanordnungen erstellt.

Das in der DE 689 18 045 C2 beschriebene Verfahren zur Repositionierung von Zähnen aus einer Anfangs- in eine Zielstellung lässt noch stets Wünsche offen. Zum Beispiel werden die vorangehend geschilderten Nachteile mit dem in dieser Patentschrift geschilderten Verfahren nicht abgestellt. Der dauerhafte, beeinträchtigungsfreie Erfolg einer kieferorthopädischen Behandlung ist somit noch stets von vielen Unwägbarkeiten geprägt und erfordert daher eine langjährige Erfahrung der behandelnden Person.

Der vorliegenden Erfindung lag daher die Aufgabe zugrunde, ein Verfahren bzw. ein System zur kieferorthopädischen Behandlung von Zahnfehlstellungen verfügbar zu machen, das für den Patienten sehr komfortabel zu tragen ist, ohne jedoch die zu regulierenden Zähne, das umgebende Gewebe und die zugehörigen Zahnwurzeln mechanisch überzustrapazieren. Zudem sollte ein solches Verfahren möglichst wenig Arztbesuche mit sich bringen.

Demgemäß wird die der Erfindung zugrunde liegende Aufgabe durch ein Verfahren zur Herstellung einer Vielzahl an, insbesondere transparenten, kieferorthopädischen Zahnschienen gelöst, umfassend die Schritte:
a) 3D-Röntgen, gegebenenfalls in Kombination mit 3D-Sonografie, von Zähnen und zugehörigen Zahnhalteapparaten oder Teilen davon, umfassend Zahnwurzeln, Zahnschmelz, Wurzelhaut, Kieferknochen und umgebendes Gewebe, von Unterkiefer und/oder Oberkiefer in einem Ausgangszustand, insbesondere Ist-Zustand, unter Erhalt eines digitalen 3D-Datensatzes, umfassend einen 3D-Voxelsatz,
b) Speichern dieses digitalen 3D-Datensatzes auf einem Speichermedium,
c) Verarbeiten dieses digitalen 3D-Datensatzes oder eines Teils davon unter computergestützter Generierung eines virtuellen dreidimensionalen Ausgangszustandsmodells Mᵢ mit i = 1, umfassend einen Teil oder sämtliche der der Digitalen Volumentomographie gemäß Schritt a) unterzogenen Zähne, insbesondere samt der jeweils zugehörigen Zahnwurzeln, von Ober- oder Unterkiefer sowie gegebenenfalls dem zugehörigen umgebendem Gewebe, dem Zahnschmelz, der Wurzelhaut und/oder Kieferknochen, insbesondere der zugehörigen Zahnhalteapparate,
d) computergestütztes Generieren eines virtuellen dreidimensionalen Zielzustandsmodells Mᵢ mit i = n, wobei n eine natürliche Zahl ist mit n > 1, umfassend einen Teil oder sämtliche der dem 3D-Röntgen und gegebenenfalls der 3D-Sonografie gemäß Schritt a) unterzogenen Zähne von Ober- oder Unterkiefer sowie gegebenenfalls der zughörigen Zahnwurzeln, Zahnschmelz, Wurzelhaut, Kieferknochen und/oder umgebendes Gewebe, insbesondere der zugehörigen Zahnhalteapparate, unter Verwendung des gemäß Schritt c) erhaltenen virtuellen dreidimensionalen Ausgangszustandsmodells Mₗ,
e) computergestütztes Generieren einer Serie an Zwischenzustandsmodellen Mᵢ mit i = 2 bis n-1, unter Verwendung des gemäß Schritt c) erhaltenen virtuellen dreidimensionalen Ausgangszustandsmodells Mₗ und des gemäß Schritt d) erhaltenen virtuellen dreidimensionalen Zielzustandsmodells Mₙ, wobei aufeinander folgende Zustandsmodelle Mᵢ jeweils eine inkrementelle Änderung mindestens eines Zahns in Richtung auf das Zielzustandsmodell Mₙ umfassen,
f) computergestütztes Generieren von zu den Zustandsmodellen Mᵢ, i = 2 bis n, korrespondierenden virtuellen dreidimensionalen Zahnschienenmodellen Zᵢ, umfassend eine Vorderseiten- und eine Rückseitenwandung und ein die Vorderseiten- und die Rückseitenwandung verbindendes Auflageelement,
g) computergestütztes Herstellen von, insbesondere transparenten, Zahnschienen ZSᵢ auf Basis der virtuellen dreidimensionalen Zahnschienenmodelle Zᵢ mittels Rapid Prototyping.

Mit dem erfindungsgemäßen Verfahren werden Zahnschienen bzw. ein Satz an aufeinander abgestimmten Zahnschienen erhalten, mit dem Zähne gemäß der Aligner-Therapie schrittweise aus einer Zahnfehlstellung in eine gewünschte Zielzahnstellung bewegt werden können. Die mit dem Verfahren erhaltene Vielzahl an Zahnschienen bildet dabei den graduellen Fortgang des Behandlungsverlaufs ab. Jede Zahnschiene wird in der Regel nur solange vom Patienten getragen, bis die Zähne, die durch diese Zahnschiene vorgegebene Position erreicht haben. Sodann wird die nächste Zahnschiene aus der Serie an Zahnschienen auf die Zähne aufgesetzt. Mit den Zahnschienen werden ausgewählte Zähne gezielt mit Kraft beaufschlagt, um diese zu einer Lageveränderung in einem durch die Zahnschiene vorgegebenen Umfang zu bewegen. Im Allgemeinen ist eine Zahnschiene aus dem Satz bzw. der Vielzahl an Zahnschienen von dem Patienten für die Dauer von etwa zwei bis vier Wochen zu tragen, bis ein Wechsel zu der nachfolgenden Zahnschiene aus dem Satz an Zahnschienen vollzogen werden kann. Mit jeder Zahnschiene aus der Vielzahl an Zahnschienen wird eine inkrementelle Änderung der Zahnfehlstellung in Richtung auf die gewünschte Zielzahnstellung bewirkt.

Mit dem erfindungsgemäßen Verfahren gelingt es, Zahnschienen einfach und zuverlässig zugänglich zu machen, mit denen die Kräfte, die bei der Repositionierung auf einen Zahn sowie gegebenenfalls auch auf die zughörige Zahnwurzel, das umgebende Gewebe und/oder den zughörigen Kieferknochenbereich wirken, sehr genau eingestellt werden können. Ferner gelingt es, die maximale mechanische Beanspruchung, die pro Repositionierungsschritt mit einer dafür vorgesehenen Zahnschiene aus dem Satz an Zahnschienen auf einen Zahn sowie gegebenenfalls auf die zughörige Zahnwurzel, das umgebende Gewebe und/oder den zughörigen Kieferknochenbereich wirken darf, besonders genau bzw. vorteilhaft einzustellen. Insbesondere durch Mitberücksichtigung der zu einem Zahn korrespondierenden Zahnwurzel bei Verfahrensschritt c) lassen sich optimierte Zwischenzustandsmodele generieren. Hierdurch lässt sich eine Überbeanspruchung von Zahn, Zahnwurzel, Zahngewebe und/oder Kieferknochen vermeiden. Eine degenerative Schädigung von Zahn, Zahnwurzel, Zahngewebe oder Kieferknochen kann unterbunden werden. Demgemäß kann über die Vielzahl an Zahnschienen die Zahnrepositionierung in jedem Behandlungsschritt immer bis zu einer Auslenkung vollzogen werden, die für den Patienten keine nachteiligen Folgen, insbesondere keine nachteiligen Langzeitfolgen, z.B. hinsichtlich Wurzel- und/oder Knochenabbau mit sich bringt. Eine Vielzahl an Zahnschienen im Sinne der vorliegenden Erfindung umfasst regelmäßig zwei, drei, vier, fünf oder mehr Zahnschienen. Vielfach ist ein Satz von 20 bis 50, beispielsweise 25 bis 40 Zahnschienen vonnöten, um Zähne von einer Fehlstellung in eine Zielstellung zu repositionieren. Die einzelnen Zahnschienen sind im Allgemeinen für einen Zeitraum von zwei bis vier Wochen zu tragen. Es ist durchaus möglich, die Zahnschienen für kürzere Zeit-perioden, beispielsweise einige Stunden, zu entnehmen, ohne den Behandlungserfolg zu gefährden. Mit jeder neuen Zahnschiene wird eine Zahnfehlstellung ein wenig mehr in Richtung auf die Zielstellung bewegt. Hierbei kann in einem Schritt, d.h. mit einer Zahnschiene nur ein einziger Zahn wie auch eine Vielzahl an Zähnen mit Kraft beaufschlagt und somit bewegt werden. Eine inkrementelle Änderung der Zahnstellung durch Verwendung einer Zahnschiene ZSi kann somit auch die Veränderung der Lage nur eines Zahnes umfassen. Eine Lageverändung kann beispielsweise ein Kippen, seitliches Verschieben oder Verdrehen oder eine beliebige Kombination dieser Lageveränderungen darstellen. Mit jeder Zahnschiene ZSᵢ wird folglich eine Veränderung einer Zahnstellung in einem vorgegebenen kleinen Abschnitt (Inkremente) bewirkt, wobei pro Zahnschiene eine inkrementelle Lageveränderung von üblicherweise nicht mehr als 2 mm, vorzugsweise nicht mehr als 1 mm und besonders bevorzugt nicht mehr als 0,5 mm erfolgt. Diese Bereichsangaben beziehen sich auf die maximale Auslenkung, die ein Punkt eines zu bewegenden Zahnes während der Behandlung mit einer Zahnschiene ZSᵢ erfährt. Mit Hilfe der mit dem erfindungsgemäßen Verfahren erhaltenen Zahnschienen kann sichergestellt werden, dass in jedem einzelnen Behandlungsschritt, d.h. mit jeder aufeinanderfolgenden Zahnschiene eine mechanische Belastung auf zu bewegende Zähne erzeugt wird, die dem Behandlungserfolg dienlich ist, ohne jedoch die geschilderten Risiken wie Degeneration von Zahnwurzel, umgebenden Gewebe und/oder Kieferknochen in Kauf nehmen zu müssen.

Für das 3D-Röntgen in Schritt a) kann insbesondere auf die Digitale Volumentomographie (DVT), die Computertomographie (CT), die Rotationsangiographie oder das Phasenkontraströntgen zurückgegriffen werden. Im Sinne der Erfindung sind die vorangehend genannten Verfahren unter 3D-Röntgen zu subsumieren. Als besonders zweckmäßig hat sich für viele Anwendungen die digitale Volumentomographie erwiesen. Auch kann bei Einsatz der digitalen Volumentomographie die Strahlenbelastung des Patienten minimiert werden. Die mittels 3D-Röntgen erhaltenen digitalen Daten können ergänzt werden durch Daten, die mittels 3D-Sonografie gewonnen wurden.

Die Verfahrensschritte d), e), f) und g) können in ihrer Reihenfolge, solange und soweit praktikabel, variiert werden. Beispielsweise können einige oder sämtliche Zwischenzustandsmodelle gemäß Schritt e) auch vor dem Zielzustandsmodell generiert werden. Allerdings hat es sich als vorteilhaft erwiesen, ausgehend von dem Ausgangszustandsmodell zunächst das Zielzustandsmodell zu generieren. Auch kann aus einem Zwischenzustandsmodell zunächst das hierzu korrespondierende Zahnmodell generiert werden. D.h. es ist nicht notwendig im Sinne der vorliegenden Erfindung, dass zunächst sämtliche Zwischenzustandsmodelle generiert werden. In gleicher Weise ist es nicht zwingend erforderlich, zunächst sämtliche Zahnschienenmodelle zu generieren, bevor mit der Fertigung der hierzu korrespondierenden Zahnschienen mittels Rapid Prototyping begonnen wird. Vielfach ist es jedoch zweckmäßig, zunächst sämtliche Zahnschienenmodelle Zi zu generieren, bevor die hierzu korrespondierenden Zahnschienen ZSi gefertigt werden.

Eine besonders geeignete Ausführungsform des erfindungsgemäßen Verfahrens zeichnet sich dadurch aus, dass der Verfahrensschritt c) die folgenden Teilschritte umfasst:
ca) Extrahieren der digitalen 3D-Daten, einschließlich des jeweils zughörigen 3D-Voxelsatzes, von mindestens einem Zahn, insbesondere einer Vielzahl an Zähnen oder von sämtlichen Zähnen, des Ober- und/oder Unterkiefers, samt jeweils zugehöriger Zahnwurzel und vorzugsweise auch samt jeweils umgebendem Gewebe, aus dem digitalen 3D-Datensatz unter Erhalt eines digitalen 3D-Restdatensatzes,
cb) Überführen dieser extrahierten 3D-Daten, einschließlich des extrahierten 3D-Voxelsatzes, vermittels eines oberflächenbasierten oder punktbasierten Rendering in einen 2D-Datensatz, insbesondere einen STL-Datensatz, geeignet und ausgelegt zur räumlichen Bildschirmwiedergabe der Oberflächenstrukturen des mindestens einen Zahns, insbesondere der Vielzahl an Zähnen, samt der jeweils zugehörigen Zahnwurzel und vorzugsweise auch samt des jeweils umgebenden Gewebes, und
cc) Kombinieren des 2D-Datensatzes gemäß Schritt cb) mit dem 3D-Restdatensatz gemäß Schritt ca) unter Erhalt eines modifizierten digitalen Datensatzes geeignet und ausgelegt für die räumliche Bildschinnwiedergabe des virtuellen dreidimensionalen Ausgangszustandsmodells Mᵢ.

Mit der geschilderten Verfahrensvariante lässt sich die zu bearbeitende Datenmenge signifikant reduzieren, ohne jedoch Einbußen bei den hier relevanten Informationen in Kauf nehmen zu müssen.

Für die Generierung einer Oberflächenpräsentation aus den extrahierten 3D-Daten, einschließlich des extrahierten 3D-Voxelsatzes, kann auf dem Fachmann bekannte oberflächenbasierte Visualisierungsverfahren zurückgegriffen werden. Hierbei können z.B. Objektoberflächen direkt aus Voxeldaten rekonstruiert werden. Für das oberflächenbasierte Rendering macht man regelmäßig zur Flächenbeschreibung Gebrauch von Splines und Dreiecknetzen. Besonders bevorzugt ist der Einsatz von STL-Datensätzen. Das punktbasierte Rendering stellt eine Alternative zum oberflächenbasierten Rendering, beispielsweise dem Dreiecks-Rendering dar. Vor allem beim Rendering von komplexen 3D-Modellen mit sehr hohen Detailanforderungen kann es vorkommen, dass die projizierte Fläche von Dreiecken kleiner als ein Pixel ist. In solchen Fällen bietet es sich häufig an, einzelne Punkte als Rendering-Primitiv zu verwenden.

Mit dem in Schritt c) erhaltenen virtuellen dreidimensionalen Ausgangszustandsmodell Mₗ ist im Sinne der Erfindung der digitale Datensatz, der diesem virtuellen Zustandsmodell zugrunde liegt, mit umfasst. Das Gleiche trifft auf das nach der Verfahrensvariante ca) bis cc) erhaltene Ausgangszustandsmodell zu. In den Folgeschritten, z.B. Schritt d) kann folglich in diesem Zusammenhang bei Verwendung des virtuellen dreidimensionalen Ausgangszustandsmodells Mₗ Gebrauch gemacht werden von dem zugrunde liegenden digitalen Datensatz. Das Gleiche trifft auf den Einsatz der virtuellen dreidimensionalen Zwischenzustandsmodelle und des virtuellen dreidimensionalen Zielzustandsmodells zu.

In einer zweckmäßigen Ausgestaltung des erfindungsgemäßen Verfahrens ist vorgesehen, dass der gemäß Schritt cc) erhaltene modifizierte digitale Datensatz, der geeignet und ausgelegt ist für die räumliche Bildschirmwiedergabe des virtuellen dreidimensionalen Ausgangszustandsmodells Mᵢ, in Schritt d) und gegebenenfalls Schritt e) verwendet wird als gemäß Schritt c) erhaltenes virtuelles dreidimensionales Ausgangszustandsmodell Mₗ.

Das den Zahn umgebende Gewebe umfasst im Sinne der vorliegenden Erfindung die Mukosa und/oder die, insbesondere befestigte, Gingiva.

Wenngleich für die erfolgreiche Durchführung des erfindungsgemäßen Verfahrens nicht zwingend erforderlich, hat es sich für einige Anwendungsfälle als geeignet erwiesen, wenn das für das 3D-Röntgen verwendete Röntgengerät, insbesondere der Volumentomograph oder der Computertomograph, vorab Houndsfield-kalibriert worden ist.

Das erfindungsgemäße Verfahren lieferte insbesondere auch dann für den jeweiligen konkreten Anwendungsfall besonders geeignete Zahnschienen, wenn beachtet wird, dass in Schritt e) das Ausmaß der inkrementellen Änderung mindestens eines Zahns in Richtung auf das Zielzustandsmodell Mₙ in Abhängigkeit von der Größe und/oder Orientierung der zugehörigen Zahnwurzel festgelegt wird und/oder dass in Schritt e) das Ausmaß der inkrementellen Änderung mindestens eines Zahns in Richtung auf das Zielzustandsmodell Mₙ in Abhängigkeit von der Dicke des Zahnschmelzes des zugehörigen Zahns festgelegt wird.

Des weiteren ist in einer Ausgestaltung des erfindungsgemäßen Verfahren vorgesehen, dass bei dem computergestützten Generieren von zu den Zustandsmodellen Mᵢ korrespondierenden virtuellen dreidimensionalen Zahnschienenmodellen Zᵢ gemäß Schritt f) die Vorderseitenwandung, die Rückseitenwandung und gegebenenfalls auch das Auflageelement mindestens eines Zahnschienenmodells Zᵢ, jeweils oder zusammen, mit einer im Wesentlichen einheitlichen Dicke einstellbar sind oder ausgestattet werden.

Das Auflageelement verbindet Vorderseiten- und Rückseitenwandung der Zahnschienenmodelle bzw. Zahnschienen. Das Auflageelement kann, hat jedoch nicht stets innenseitig auf einer Zahnkrone aufzuliegen. Regelmäßig bildet die Außenseite des Auflageelements die Hauptangriffs- bzw. Kaufläche für den bzw. die im Kiefer gegenüberliegenden Zahn/Zähne.

In einigen Fällen kann es jedoch auch besonders zweckmäßig sein, dass bei dem computergestützten Generieren von mindestens einem zu einem Zustandsmodell Mᵢ korrespondierenden virtuellen dreidimensionalen Zahnschienenmodell Zᵢ gemäß Schritt f) die Vorderseitenwandung und/oder die Rückseitenwandung und gegebenenfalls auch das Auflageelement mindestens eines Zahnschienenmodells Zᵢ mit jeweils einer im Wesentlichen uneinheitlichen Dicke einstellbar oder ausgestattet sind, insbesondere mit mindestens einem ersten Areal mit gegenüber umgebenden Bereichen unterschiedlicher, insbesondere größerer, Dicke. Hierbei lässt sich ein besonders positiver Behandlungsverlauf auch dadurch erreichen, dass die Vorderseitenwandung und/oder die Rückseitenwandung über mindestens ein erstes Areal mit einer gegenüber benachbarten zweiten Arealen größerer Dicke verfügen und dass dieses mindestens eine erste Areal größerer Dicke mit der Lage eines Zahns korrespondiert, dessen Position inkrementell zu ändern ist. Indem die Dicke der Zahnschiene in einem Abschnitt größer ist als in den umliegenden, benachbarten Arealen, kann an dieser Stelle der zu bewegende Zahn gezielt mit einer auf die angestrebte Repositionierung abgestimmten Kraft beaufschlagt werden. Hierbei ist besonders bevorzugt, wenn im Sinne der Erfindung größere Dicke bedeutet, dass hiermit eine größere Ausdehnung auf der Innenseite von Vorderseiten- und/oder Rückseitenwandung, insbesondere Vorderseitenwandung, in Richtung des Zahns einhergeht.

In einer Ausgestaltung hat es sich als vorteilhaft erwiesen, im Bereich des unteren Rands der Vorderseitenwandung und/oder der Rückseitenwandung der Zahnschiene, d.h. dem Auflageelement der Zahnschiene gegenüberliegend, die jeweilige Wandung der Zahnschiene dicker und/oder härter auszugestalten. Diese Verdickung im Randbereich erstreckt sich vorzugsweise nur außenseitig. Hierdurch gelingt regelmäßig eine ausgeprägtere transversale Stabilisierung.

Insbesondere dann, wenn Zahnfehlstellungen von Ober- und/oder Unterkiefer und damit auch deren relative Lage zueinander zu behandeln sind, ist es von Vorteil, wenn Zahnschienenmodelle Zᵢ für Ober- und Unterkiefer erstellt werden, deren jeweilige Auflageelemente unter Berücksichtigung von Ausgangszustandsmodell Mₗ und Zielzustandsmodell Mₙ aufeinander abgestimmt ist. Beispielsweise können Auflageelemente Kauflächen repräsentieren, die zu der Kaufläche der beim Biss jeweils gegenüberliegenden Zahnkronen korrespondieren. Auch kann das Auflageelement derart gestaltet sein, dass über die Wechselwirkung beim Biss mit der gegenüberliegenden Zahnkrone die angestrebte inkrementelle Lageveränderung unterstützt wird.

Besondere Behandlungsziele lassen sich auch dadurch erreichen, dass Zahnschienenmodelle Zᵢ für Ober- oder Unterkiefer erstellt werden, deren Auflageelemente, insbesondere im Seitenzahnbereich, mindestens eine Rampe oder mindestens eine Vertiefung aufweisen. Diese sogenannten okklusalen Aufbisse oder Rampen, Erhebungen und Vertiefungen können zur Steuerung der Bisslage der sagittalen Aufbisse im Seitenzahnbereich eingesetzt werden. Auch kann auf diese Weise ein Rückbiss oder ein Vorbiss mit behandelt bzw. zumindest mit berücksichtigt werden. Des Weiteren kann auf diese Weise Einfluss genommen werden auf die Entwicklung einer für die Zahnbewegung notwendigen Verankerung. Darüber hinaus kann mit den sogenannten okklusalen Aufbissen oder Rampen, Erhebungen und Vertiefungen die Bisslage in der Vertikalen mit Aufbissen auch in der Front, bei Tiefbissen und offenen Bissen gesteuert werden. Außerdem können auf diese Weise Lateralabweichungen bei asymmetrischen Gebissanomalien korrigiert werden.

Es hat sich in einigen Fällen als zweckmäßig erwiesen, dass bei dem computergestützten Generieren von mindestens einem zu einem Zustandsmodell Mᵢ korrespondierenden virtuellen dreidimensionalen Zahnschienenmodell Zᵢ gemäß Schritt f) die Vorderseitenwandung und/oder die Rückseitenwandung und gegebenenfalls auch das Auflageelement mindestens eines Zahnschienenmodells Zᵢ mit einer im Wesentlichen einheitlichen Konsistenz und/oder mit einem im Wesentlichen einheitlichen Wandungsaufbau und/oder mit einer im Wesentlichen einheitliche Härte einstellbar sind oder ausgestattet werden.

Besonders vorteilhafte Resultate stellen sich auch dadurch ein, dass bei dem computergestützten Generieren von mindestens einem zu einem Zustandsmodell Mᵢ korrespondierenden virtuellen dreidimensionalen Zahnschienenmodell Zᵢ gemäß Schritt f) die Vorderseitenwandung und/oder die Rückseitenwandung und gegebenenfalls auch das Auflageelement mindestens eines Zahnschienenmodells Zᵢ mit einer im Wesentlichen uneinheitlichen Konsistenz und/oder mit einem im Wesentlichen uneinheitlichen Wandungsaufbau und/oder mit einer im Wesentlichen uneinheitlichen Härte einstellbar sind oder ausgestattet werden. Als besonders zweckdienlich hat sich hierbei erwiesen, dass die Vorderseitenwandung und/oder die Rückseitenwandung über mindestens ein drittes Areal mit einer gegenüber benachbarten vierten Arealen unterschiedlichen Konsistenz und/oder mit einem unterschiedlichen Wandungsaufbau und/oder mit einer unterschiedlichen Härte verfügen und dass dieses mindestens eine dritte Areal mit der Lage eines Zahns korrespondiert, dessen Position inkrementell zu ändern ist.

Ein vorteilhafter Einfluss auf die angestrebte inkrementelle Lageveränderung der Zähne lässt sich auch dadurch erhalten, dass bei dem computergestützten Generieren von mindestens einem zu einem Zustandsmodell Mᵢ korrespondierenden virtuellen dreidimensionalen Zahnschienenmodell Zᵢ gemäß Schritt f) die dem Zahn zugewandte Seite (Innenseite) der Vorderseitenwandung und/oder der Rückseitenwandung und gegebenenfalls auch des Auflageelements mindestens eines Zahnschienenmodells Zᵢ in Bezug auf einen an dieser Innenseite zur Anlage kommenden Zahn mit einer Oberflächenstrukturierung, insbesondere mit einer rillen oder zapfenförmigen Oberflächenstruktur, und/oder mit einem elastischen Material einstellbar sind oder ausgestattet werden. Als besonders geeignet hat sich dabei eine solche Variante erwiesen, bei der die Innenseite der Vorderseitenwandung und/oder der Rückseitenwandung und gegebenenfalls auch des Auflageelements mit mindestens einem fünften Areal mit einer gegenüber benachbarten sechsten Arealen ausgeprägteren Oberflächenstrukturierung, insbesondere umfassend eine rillen- oder zapfenförmige Oberflächenstruktur, und/oder mit einem elastischeren Material einstellbar sind oder ausgestattet werden. Verfügt die Innenseite der Vorder- und/oder Rückseitenwandung der Zahnschiene über Rillen, liegt vorzugsweise eine Vielzahl an im Wesentlichen parallel verlaufenden Rillen vor. Diese Rillen verlaufen vorzugsweise quer zu der Zahnachse, d.h. zu der Achse, die sich von der Wurzel in Richtung der Auflagefläche des Zahns erstreckt. Die Rillen können in einer zweckmäßigen Ausgestaltung eine Rillentiefe im Bereich von 0.001 mm bis 0,4 mm, vorzugsweise im Bereich von 0,01 bis 0,1 mm, aufweisen. Als besonders zweckmäßig hat es sich erwiesen, die Innenseite von Vorderseiten- und/oder Rückseitenwandung mit einer Vielzahl an Zapfen bzw. Zäpfchen auszustatten. Hierbei liegt die Vielzahl an Zapfen bzw. Zäpfchen bevorzugt benachbart zueinander vor, so dass mindestens ein zusammenhängendes Zapfen- bzw. Zäpfchenareal gebildet wird. Die Höhe der Zapfen bzw. Zäpfchen liegt in einer zweckmäßigen Ausgestaltung im Bereich von 0.001 mm bis 0,4 mm, vorzugsweise im Bereich von 0,01 bis 0,1 mm. Die Rillen und Zapfen bzw. Zäpfchen sind in einer bevorzugten Ausführungsform elastischer ausgestaltet als die weiter von der Innenseite der Zahnschiene entfernten Bereiche. Bei Anwesenheit der genannten Rillen oder Zäpfchen auf der Innenseite von Vorder- und/oder Rückseitenwandung, insbesondere Vorderseitenwandung, gelingt im Allgemeinen eine bessere Haftung der Zahnschiene an den Zahn. Hiermit geht regelmäßig eine effektivere inkrementelle Verschiebung des betroffenen Zahns einher.

Besonders vorteilhaft auf den jeweiligen Patienten abgestimmte Behandlungserfolge stellen sich mit einem solchen weiterentwickelten erfindungsgemäßen Verfahren ein, dass ferner umfasst das computergestützte virtuelle Isolieren mindestens eines Zahns samt zugehöriger Zahnwurzel, Wurzelhaut, Zahnschmelz, Kieferknochen und/oder umgebendem Gewebe, insbesondere des zugehörigen kompletten Zahnhalteapparats, und Verwendung der bei diesem Isolieren erhaltenen Daten in den Schritten d), e), f) und/oder g).

Auch hat es sich als zweckmäßig erwiesen, auf der Basis der durch das virtuelle Extrahieren in Schritt ca) gewonnen Daten den Alveolarkamm und das Alveolarseptum computergestützt zu bestimmen. Alveolarkamm und -septum können auf diese Weise in die Bildschirmwiedergabe eingearbeitet werden und helfen, den Grad der pro Zahnschiene vorzunehmenden Repositionierung optimal einstellen zu können.

Nach dem erfindungsgemäßen Verfahren werden die Zahnschienen aus den gewonnenen digitalen Datensätzen mittels eines Rapid-Prototyping-Verfahren unmittelbar hergestellt, ohne dass es der Anfertigung von Modellen bedarf. Geeignete Rapid-Prototyping-Verfahren gemäß Schritt g) umfassen lithographische, insbesondere stereolithografische, Verfahren, Laser-Sinter-Verfahren, Schicht-Laminat-Verfahren (Layer Laminate Manufacturing), Thermojet-Verfahren, Extrusions-Verfahren (Fused Layer Modeling), 3D-Print-Verfahren, DLP-Maskentechnik-Verfahren und 3D-Plott-Verfahren. Das erfindungsgemäße Verfahren zeichnet sich dadurch aus, dass es dem behandelnden Fachmann ermöglicht, den für die Repositionierung benötigten Satz an Zahnschienen selber herstellen zu können. Der gesamte Prozess von der Erkennung und Analyse der Zahnfehlstellung über die Festlegung der Schrittfolge hin zu einer Zielzahnstellung bis zur Fertigung der hierfür erforderlichen Zahnschienen kann in ein und derselben Behandlungspraxis vorgenommen werden. Dadurch lässt sich die Gesamtbehandlungsdauer verkürzen, auch wird die Anzahl der Arztbesuche reduziert.

Das Material der Zahnschienen, welche mittels Rapid-Prototyping erhalten werden, ist dem Fachmann bekannt. Hierfür kommen regelmäßig polymere Kunststoffe bzw. zu solchen Kunststoffen polymerisierbare Ausgangsverbindungen zum Einsatz, z.B. Epoxy-basierte Harze, gegebenenfalls enthaltend mindestens einen Weichmacher, oder (Meth)acrylsäure und/oder (Meth)acrylsäureester. Auch die vorangehend aufgelisteten generativen Verfahren des Rapid-Prototyping sind dem Fachmann geläufig. Transparente Zahnschienen basieren dabei häufig auf Poly(meth)acrylat(co)polymeren.

Die der Erfindung zugrunde liegende Aufgabe wird des Weiteren gelöst durch eine, insbesondere transparente, kieferorthopädische Zahnschiene, insbesondere einen Satz an, insbesondere transparenten, kieferorthopädischen Zahnschienen, erhalten nach einem Rapid Prototyping-Verfahren unter Verwendung von mittels 3D-Röntgen und gegebenenfalls, in Kombination hiermit, mittels 3D-Sonografie, von Zähnen und zugehörigen Zahnhalteapparaten, umfassend Zahnwurzeln, Zahnschmelz, Wurzelhaut, Kieferknochen und umgebendes Gewebe, von Unterkiefer und/oder Oberkiefer generierten digitalen Datensätzen.

Hierbei sind solche kieferorthopädischen Zahnschienen besonders bevorzugt, die nach dem erfindungsgemäßen Verfahren erhalten worden sind. Darüber hinaus sind auch solche kieferorthopädischen Zahnschienen besonders bevorzugt, umfassend eine Vorderseiten- und eine Rückseitenwandung und ein die Vorderseiten- und die Rückseitenwandung verbindendes Auflageelement, wobei die Vorderseitenwandung und/oder die Rückseitenwandung und gegebenenfalls auch das Auflageelement über mindestens ein erstes Areal mit einer gegenüber benachbarten zweiten Arealen größerer Dicke verfügen und wobei dieses mindestens eine erste Areal größerer Dicke mit der Lage eines Zahns korrespondiert, dessen Position inkrementell zu ändern ist, und/oder
wobei die Vorderseitenwandung und/oder die Rückseitenwandung und gegebenenfalls auch das Auflageelement über mindestens ein drittes Areal mit einer gegenüber benachbarten vierten Arealen unterschiedlichen Konsistenz, einem unterschiedlichen Wandungsaufbau und/oder einer unterschiedlichen Härte verfügen und wobei dieses mindestens eine dritte Areal mit der Lage eines Zahns korrespondiert, dessen Position inkrementell zu ändern ist, und/oder
wobei die Innenseite der Vorderseitenwandung und/oder der Rückseitenwandung und gegebenenfalls auch des Auflageelements über mindestens ein fünftes Areal mit einer gegenüber benachbarten sechsten Arealen ausgeprägteren Oberflächenstrukturierung, insbesondere umfassend eine rillen- oder zapfenförmige Oberflächenstruktur, und/oder über ein elastischeres Material verfügen und wobei dieses mindestens eine fünfte Areal mit der Lage eines Zahns korrespondiert, dessen Position inkrementell zu ändern ist. Hierbei kann vorgesehen sein, dass das erste und das dritte Areal oder das erste und das fünfte Areal oder das dritte und das fünfte Areal oder das erste, dritte und das fünfte Areal im Wesentlichen deckungsgleich sind und/oder dass das zweite und vierte Areal oder das zweite und sechste Areal oder das vierte und sechste Areal oder das zweite, vierte und sechste Areal im Wesentlichen deckungsgleich sind.

Beispielsweise kann man in einer geeigneten Ausführungsform diejenigen Bereiche einer Zahnschiene ZSᵢ bzw. eines Zahnschienenmodell Zᵢ, die Zähne er- bzw. einfassen, die mit dieser Zahnschiene ZSᵢ oder dem zugrunde liegenden Zahnschienenmodell Zᵢ keine inkrementelle Lageveränderung erfahren sollen, mit einer größeren Wandungsdicke und/oder Härte ausstatten, so dass diese Zähne eine ausgeprägte Verankerung und damit auch Stabilisierung ihrer Lage erfahren. Auch geht mit dieser Vorgehensweise der Vorteil einher, dass im Wege der Verwendung härterer und/oder dickerer Areale in den Bereichen, in denen die Zähne nicht inkrementell zu bewegen sind, eine gezieltere Kraftbeaufschlagung in den Bereichen gelingt, in denen ein Zahn inkrementell zu bewegen ist.

Der vorliegenden Erfindung lag die überraschende Erkenntnis zugrunde, dass sich unter Mitberücksichtigung der Lage, Orientierung und Größe der Zahnwurzeln sowie des umgebenden Gewebes eine Serie an Zahnschienen für die inkrementelle Änderung einer Zahnfehlstellung konzipieren und herstellen lässt, die den individuellen Gegebenheiten nicht nur in der Weise Rechnung trägt, dass man schrittweise von einer Zahnfehlstellung im Ausgangszustand zu einer gewünschten Zahnzielstellung gelangt, sondern dass hierbei weder die Zahnwurzeln noch das umgebende Gewebe oder die zugehörigen Kieferknochenbereiche der bewegten Zähne oder von benachbarten Zähnen beeinträchtigt werden, auch nicht in zeitlicher Verzögerung nach Beendigung der Behandlung. Weiterhin hat es sich als sehr vorteilhaft erwiesen, dass man zwar zunächst von einem mittels 3D-Röntgen gewonnenen digitalen Datensatz ausgeht, hieraus jedoch jedenfalls für die betroffenen Zähne einen Oberflächendatensatz generiert, um diesen dann anschließend mit dem verbliebenen 3D-Restdatensatz zu kombinieren bzw. matchen. Auf diese Weise kann die Datenmenge erheblich reduziert und dadurch auch datentechnisch einfacher handhabbar gemacht werden. Ein weiterer Vorteil, der mit der vorliegenden Erfindung einhergeht, ist, dass vollständig auf die Anfertigung von Modellen, beispielsweise Gipsabdrücken verzichtet werden kann. Derartige Modelle sind für das erfindungsgemäße Verfahren weder erforderlich, um von einer Ausgangszahnstellung, die es zu korrigieren gilt, zu einem Modell für die gewünschte Zielzahnstellung zu gelangen, noch um Zahnschienenmodelle oder diese Zahnschienen selber zu fertigen. Vielmehr ist es nun möglich, ausgehend von einem digitalen Datensatz der mittels 3D-Röntgentechnik gewonnen wurde, sogleich zu einer Serie an Zahnschienen für die schrittweise Veränderung einer Zahnfehlstellung in eine gewünschte Zielzahnstellung zu gelangen.

Weitere Merkmale und Vorteile der Erfindung ergeben sich aus der nachgehenden Beschreibung, in der bevorzugte Ausführungsformen der Erfindung beispielhaft anhand schematischer Zeichnungen erläutert sind. Dabei zeigen
- Figur 1: eine schematische Schnittansicht eines in einer erfindungsgemäßen Zahnschiene vorliegenden Zahns und
- Figur 2: eine schematische Darstellung eines vergrößerten Segments von Zahnschiene und Zahn gemäß Figur 1.

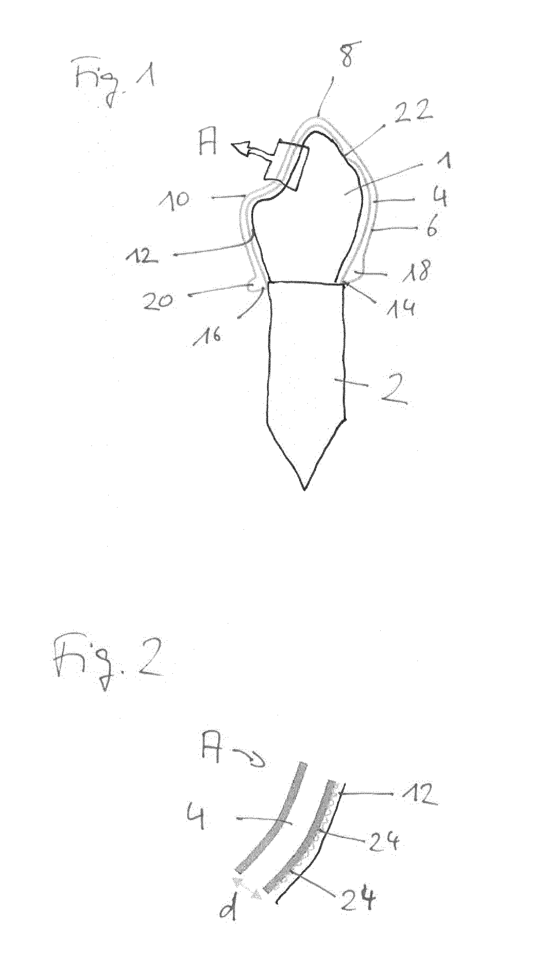

Figur 1 zeigt eine schematische Schnittansicht durch einen Zahn 1 samt Zahnhalteapparat 2 sowie den diesen Zahn 1 einfassenden Abschnitt einer erfindungsgemäßen Zahnschiene 4. Die Zahnschiene 4 ist derart berechnet und mittels 3 D-Rapid Prototyping hergestellt worden, dass die Innenseiten von Vorderseitenwandung 6, Auflagefläche 8 und Rückseitenwandung 10 an dem Umriss 12 des Zahns 1 anliegen. Der Umriss 12 des Zahns 1 wird regelmäßig durch den Zahnschmelz gebildet. Die Zahnschiene 4 verfügt in der dargestellten Ausführungsform nicht über eine einheitliche Dicke. Sowohl an dem der Auflagefläche 8 gegenüberliegenden Rand 14 der Vorderseitenwandung 6 als auch an dem der Auflagefläche 8 gegenüberliegenden Rand 16 der Rückseitenwandung 10 liegen nach außen verdickte Materialbereiche 18 bzw. 20 vor. Hierdurch gelingt eine merkliche transversale Stabilisierung der mit den erfindungsgemäßen Zahnschienen einer kieferorthopädischen Behandlung unterzogen Zähne. Darüber hinaus verfügt die Zahnschiene 4 in einem Abschnitt 22 der Vorderseitenwandung 6 über eine Verdickung in Form einer innenseitigen Auswölbung in Richtung des Zahns 1. Durch derartige verdickte Bereiche kann gezielt die inkrementelle Verschiebung eines bestimmten Zahns in die gewünschte Richtung forciert werden. Es ist zum Beispiel nicht mehr nötig, Abstandshalter auf den Zahn aufzukleben, um in Wechselwirkung mit einer regulären Zahnschiene mit einheitlicher Dicke einen entsprechenden Effekt zu erzielen.

Figur 2 zeigt den Ausschnitt A aus der Zahnschiene 4 gemäß Figur 1. Die Dicke d der Zahnschiene in diesem Bereich liegt in der dargestellten Ausführungsform bei etwa 0,7 mm. Wie der Vergrößerung gemäß Figur 2 zu entnehmen ist, ist die Innenseite der Zahnschiene 4 mit einer Vielzahl an benachbarten Zäpfchen 24 versehen. Diese Zäpfchen 24 können zum Beispiel über eine Höhe verfügen, die einem Zwanzigstel bis einem Fünftel der Dicke der Zahnschiene 4 entspricht, beispielsweise 0,07 mm. Durch Verwendung solcher Zäpfchenareale auf der Innenseite der Zahnschiene gelingt regelmäßig eine wesentlich bessere Haftung der Zahnschiene an den Zahn, wodurch dieser wesentlich gezielter inkrementell in die gewünschte Richtung bzw. Zielposition verschoben werden kann.

Die in der vorstehenden Beschreibung und in den Ansprüchen offenbarten Merkmale der Erfindung können sowohl einzeln aus auch in jeder beliebigen Kombination für die Verwirklichung der Erfindung in ihren verschiedenen Ausführungsformen wesentlich sein.

## Patentansprüche

1. Verfahren zur Herstellung einer Vielzahl an, insbesondere transparenten, kieferorthopädischen Zahnschienen, umfassend die Schritte:
a) 3D-Röntgen, gegebenenfalls in Kombination mit 3D-Sonografie, von Zähnen und zugehörigen Zahnhalteapparaten oder Teilen davon, umfassend Zahnwurzeln, Zahnschmelz, Wurzelhaut, Kieferknochen und umgebendes Gewebe, insbesondere umfassend die Mukosa und/oder die, vorzugsweise befestigte, Gingiva, von Unterkiefer und/oder Oberkiefer in einem Ausgangszustand unter Erhalt eines digitalen 3D-Datensatzes, umfassend einen 3D-Voxelsatz,
b) Speichern dieses digitalen 3D-Datensatzes auf einem Speichermedium,
c) Verarbeiten dieses digitalen 3D-Datensatzes oder eines Teils davon unter computergestützter Generierung eines virtuellen dreidimensionalen Ausgangszustandsmodells Mᵢ mit i = 1, umfassend einen Teil oder sämtliche der dem 3D-Röntgen und gegebenenfalls der 3D-Sonografie gemäß Schritt a) unterzogenen Zähne, insbesondere samt der jeweils zugehörigen Zahnwurzeln, von Ober- oder Unterkiefer sowie gegebenenfalls dem zugehörigen umgebendem Gewebe, dem Zahnschmelz, der Wurzelhaut und/oder Kieferknochen, insbesondere der zugehörigen Zahnhalteapparate,
d) computergestütztes Generieren eines virtuellen dreidimensionalen Zielzustandsmodells Mᵢ mit i = n, wobei n eine natürliche Zahl ist mit n > 1, umfassend einen Teil oder sämtliche der dem 3D-Röntgen und gegebenenfalls der 3D-Sonografie gemäß Schritt a) unterzogenen Zähne von Ober- oder Unterkiefer sowie gegebenenfalls der zughörigen Zahnwurzeln, Zahnschmelz, Wurzelhaut, Kieferknochen und/oder umgebendes Gewebe, insbesondere der zugehörigen Zahnhalteapparate, unter Verwendung des gemäß Schritt c) erhaltenen virtuellen dreidimensionalen Ausgangszustandsmodells Mₗ,
e) computergestütztes Generieren einer Serie an Zwischenzustandsmodellen Mᵢ mit i = 2 bis n-1, unter Verwendung des gemäß Schritt c) erhaltenen virtuellen dreidimensionalen Ausgangszustandsmodells Mₗ und des gemäß Schritt d) erhaltenen virtuellen dreidimensionalen Zielzustandsmodells Mₙ, wobei aufeinander folgende Zustandsmodelle Mᵢ jeweils eine inkrementelle Änderung mindestens eines Zahns in Richtung auf das Zielzustandsmodell Mₙ umfassen,
f) computergestütztes Generieren von zu den Zustandsmodellen Mᵢ, i = 2 bis n, korrespondierenden virtuellen dreidimensionalen Zahnschienenmodellen Zᵢ, umfassend eine Vorderseiten- und eine Rückseitenwandung und ein die Vorderseiten- und die Rückseitenwandung verbindendes Auflageelement,
g) computergestütztes Herstellen von, insbesondere transparenten, Zahnschienen ZSᵢ auf Basis der virtuellen dreidimensionalen Zahnschienenmodelle Zᵢ mittels Rapid Prototyping.

2. Verfahren nach Anspruch 1, **dadurch gekennzeichnet, dass** für das 3D-Röntgen die Digitale Volumentomographie (DVT), die Computertomographie, die Rotationsangiographie oder das Phasenkontraströntgen verwendet wird.

3. Verfahren nach Anspruch 1 oder 2, **dadurch gekennzeichnet, dass** der Verfahrensschritt c) umfasst:
ca) Extrahieren der digitalen 3D-Daten, einschließlich des jeweils zughörigen 3D-Voxelsatzes, von mindestens einem Zahn, insbesondere einer Vielzahl an Zähnen oder von sämtlichen Zähnen, des Ober- und/oder Unterkiefers, samt jeweils zugehöriger Zahnwurzel und vorzugsweise auch samt jeweils umgebendem Gewebe, aus dem digitalen 3D-Datensatz unter Erhalt eines digitalen 3D-Restdatensatzes, cb) Überführen dieser extrahierten 3D-Daten, einschließlich des extrahierten 3D-Voxelsatzes, vermittels eines oberflächenbasierten oder punktbasierten Rendering in einen 2D-Datensatz, insbesondere einen STL-Datensatz, geeignet und ausgelegt zur räumlichen Bildschirmwiedergabe der Oberflächenstrukturen des mindestens einen Zahns, insbesondere der Vielzahl an Zähnen, samt der jeweils zugehörigen Zahnwurzel und vorzugsweise auch samt des jeweils umgebenden Gewebes,
cc) Kombinieren des 2D-Datensatzes gemäß Schritt cb) mit dem 3D-Restdatensatz gemäß Schritt ca) unter Erhalt eines modifizierten digitalen Datensatzes geeignet und ausgelegt für die räumliche Bildschirmwiedergabe des virtuellen dreidimensionalen Ausgangszustandsmodells Mᵢ.

4. Verfahren nach Anspruch 3, **dadurch gekennzeichnet, dass** der gemäß Schritt cc) erhaltene modifizierte digitale Datensatz, der geeignet und ausgelegt ist für die räumliche Bildschirmwiedergabe des virtuellen dreidimensionalen Ausgangszustandsmodells Mᵢ, in Schritt d) und gegebenenfalls Schritt e) verwendet wird als gemäß Schritt c) erhaltenes virtuelles dreidimensionales Ausgangszustandsmodell Mₗ.

5. Verfahren nach einem der vorangehenden Ansprüche, **dadurch gekennzeichnet, dass** in Schritt e) das Ausmaß der inkrementellen Änderung mindestens eines Zahns in Richtung auf das Zielzustandsmodell Mₙ in Abhängigkeit von der Größe und/oder Orientierung der zugehörigen Zahnwurzel festgelegt wird und/oder dass in Schritt e) das Ausmaß der inkrementellen Änderung mindestens eines Zahns in Richtung auf das Zielzustandsmodell Mₙ in Abhängigkeit von der Dicke des Zahnschmelzes des zugehörigen Zahns festgelegt wird.

6. Verfahren nach einem der vorangehenden Ansprüche, **dadurch gekennzeichnet, dass** bei dem computergestützten Generieren von zu den Zustandsmodellen Mᵢ korrespondierenden virtuellen dreidimensionalen Zahnschienenmodellen Zᵢ gemäß Schritt f) die Vorderseitenwandung, die Rückseitenwandung und gegebenenfalls auch das Auflageelement mindestens eines Zahnschienenmodells Zᵢ, jeweils oder zusammen, mit einer im Wesentlichen einheitlichen Dicke einstellbar sind oder ausgestattet werden.

7. Verfahren nach einem der Ansprüche 1 bis 5, **dadurch gekennzeichnet, dass** bei dem computergestützten Generieren von mindestens einem zu einem Zustandsmodell Mᵢ korrespondierenden virtuellen dreidimensionalen Zahnschienenmodell Zᵢ gemäß Schritt f) die Vorderseitenwandung und/oder die Rückseitenwandung und gegebenenfalls auch das Auflageelement mindestens eines Zahnschienenmodells Zᵢ mit jeweils einer im Wesentlichen uneinheitlichen Dicke einstellbar oder ausgestattet sind, insbesondere mit mindestens einem ersten Areal mit gegenüber umgebenden Bereichen unterschiedlicher, insbesondere größerer, Dicke.

8. Verfahren nach Anspruch 7, **dadurch gekennzeichnet, dass** die Vorderseitenwandung und/oder die Rückseitenwandung über mindestens ein erstes Areal mit einer gegenüber benachbarten zweiten Arealen größeren Dicke verfügen und dass dieses mindestens eine erste Areal größerer Dicke mit der Lage eines Zahns korrespondiert, dessen Position inkrementell zu ändern ist.

9. Verfahren nach einem der vorangehenden Ansprüche, **dadurch gekennzeichnet, dass** bei dem computergestützten Generieren von mindestens einem zu einem Zustandsmodell Mᵢ korrespondierenden virtuellen dreidimensionalen Zahnschienenmodell Zᵢ gemäß Schritt f) die Vorderseitenwandung und/oder die Rückseitenwandung und gegebenenfalls auch das Auflageelement mindestens eines Zahnschienenmodells Zᵢ mit einer im Wesentlichen einheitlichen Konsistenz und/oder mit einem im Wesentlichen einheitlichen Wandungsaufbau und/oder mit einer im Wesentlichen einheitliche Härte einstellbar sind oder ausgestattet werden.

10. Verfahren nach einem der Ansprüche 1 bis 8, **dadurch gekennzeichnet, dass** bei dem computergestützten Generieren von mindestens einem zu einem Zustandsmodell Mᵢ korrespondierenden virtuellen dreidimensionalen Zahnschienenmodell Zᵢ gemäß Schritt f) die Vorderseitenwandung und/oder die Rückseitenwandung und gegebenenfalls auch das Auflageelement mindestens eines Zahnschienenmodells Zᵢ mit einer im Wesentlichen uneinheitlichen Konsistenz und/oder mit einem im Wesentlichen uneinheitlichen Wandungsaufbau und/oder mit einer im Wesentlichen uneinheitlichen Härte einstellbar sind oder ausgestattet werden.

11. Verfahren nach Anspruch 10, **dadurch gekennzeichnet, dass** die Vorderseitenwandung und/oder die Rückseitenwandung über mindestens ein drittes Areal mit einer gegenüber benachbarten vierten Arealen unterschiedlichen Konsistenz und/oder mit einem unterschiedlichen Wandungsaufbau und/oder mit einer unterschiedlichen Härte verfügen und dass dieses mindestens eine dritte Areal mit der Lage eines Zahns korrespondiert, dessen Position inkrementell zu ändern ist.

12. Verfahren nach einem der vorangehenden Ansprüche, **dadurch gekennzeichnet, dass** bei dem computergestützten Generieren von mindestens einem zu einem Zustandsmodell Mᵢ korrespondierenden virtuellen dreidimensionalen Zahnschienenmodell Zᵢ gemäß Schritt f) die dem Zahn zugewandte Seite (Innenseite) der Vorderseitenwandung und/oder der Rückseitenwandung und gegebenenfalls auch des Auflageelements mindestens eines Zahnschienenmodells Zᵢ, insbesondere in Bezug auf einen an dieser Innenseite zur Anlage kommenden Zahn, mit einer Oberflächenstrukturierung, insbesondere mit einer rillen- oder zapfenförmigen Oberflächenstruktur, und/oder mit einem elastischen Material einstellbar sind oder ausgestattet werden.

13. Verfahren nach Anspruch 12, **dadurch gekennzeichnet, dass** die Innenseite der Vorderseitenwandung und/oder der Rückseitenwandung und gegebenenfalls auch des Auflageelements mit mindestens einem fünften Areal mit einer gegenüber benachbarten sechsten Arealen ausgeprägteren Oberflächenstrukturierung, insbesondere umfassend eine rillen- oder zapfenförmige Oberflächenstruktur, und/oder mit einem elastischeren Material einstellbar sind oder ausgestattet werden.

14. Verfahren nach einem der vorangehenden Ansprüche, **dadurch gekennzeichnet, dass** Zahnschienenmodelle Zᵢ für Ober- oder Unterkiefer erstellt werden, deren Auflageelemente, insbesondere im Seitenzahnbereich, mindestens eine Rampe oder mindestens eine Vertiefung aufweisen.

15. Verfahren nach einem der vorangehenden Ansprüche, ferner umfassend das computergestützte virtuelle Isolieren mindestens eines Zahns samt zugehöriger Zahnwurzel, Wurzelhaut, Zahnschmelz, Kieferknochen und/oder umgebendem Gewebe, insbesondere des zugehörigen Zahnhalteapparats, und Verwendung der bei diesem Isolieren erhaltenen Daten in den Schritten d), e), f) und/oder g).

16. Verfahren nach einem der vorangehenden Ansprüche, **dadurch gekennzeichnet, dass** das Rapid Prototyping-Verfahren gemäß Schritt g) lithographische, insbesondere stereolithografische, Verfahren, Laser-Sinter-Verfahren, Schicht-Laminat-Verfahren (Layer Laminate Manufacturing), Thermojet-Verfahren, Extrusions-Verfahren (Fused Layer Modeling), 3D-Print-Verfahren, DLP-Maskentechnik-Verfahren und 3D-Plott-Verfahren umfasst.

17. Kieferorthopädische Zahnschiene, insbesondere transparente Zahnschiene, oder Satz an, insbesondere transparenten, kieferorthopädischen Zahnschienen, erhalten nach einem Rapid Prototyping-Verfahren unter Verwendung von mittels 3D-Röntgen und gegebenenfalls, in Kombination hiermit, mittels 3D-Sonografie von Zähnen und zugehörigen Zahnhalteapparaten, umfassend Zahnwurzeln, Zahnschmelz, Wurzelhaut, Kieferknochen und umgebendes Gewebe, von Unterkiefer und/oder Oberkiefer generierten digitalen Datensätzen oder erhalten nach dem Verfahren gemäß den Ansprüchen 1 bis 16.

18. Kieferorthopädische Zahnschiene, insbesondere gemäß Anspruch 17, umfassend eine Vorderseiten- und eine Rückseitenwandung und ein die Vorderseiten- und die Rückseitenwandung verbindendes Auflageelement, wobei die Vorderseitenwandung und/oder die Rückseitenwandung und gegebenenfalls auch das Auflageelement über mindestens ein erstes Areal mit einer gegenüber benachbarten zweiten Arealen größeren Dicke verfügen und wobei dieses mindestens eine erste Areal größerer Dicke mit der Lage eines Zahns korrespondiert, dessen Position inkrementell zu ändern ist, und/oder
wobei die Vorderseitenwandung und/oder die Rückseitenwandung und gegebenenfalls auch das Auflageelement über mindestens ein drittes Areal mit einer gegenüber benachbarten vierten Arealen unterschiedlichen Konsistenz, einem unterschiedlichen Wandungsaufbau und/oder einer unterschiedlichen Härte verfügen und wobei dieses mindestens eine dritte Areal mit der Lage eines Zahns korrespondiert, dessen Position inkrementell zu ändern ist, und/oder
wobei die Innenseite der Vorderseitenwandung und/oder der Rückseitenwandung und gegebenenfalls auch des Auflageelements über mindestens ein fünftes Areal mit einer gegenüber benachbarten sechsten Arealen ausgeprägteren Oberflächenstrukturierung, insbesondere umfassend eine rillen- oder zapfenförmige Oberflächenstruktur, und/oder über ein elastischeres Material verfügen und wobei dieses mindestens eine fünfte Areal mit der Lage eines Zahns korrespondiert, dessen Position inkrementell zu ändern ist.

19. Kieferorthopädische Zahnschiene nach Anspruch 18, **dadurch gekennzeichnet, dass** das erste und das dritte Areal oder das erste und das fünfte Areal oder das dritte und das fünfte Areal oder das erste, dritte und das fünfte Areal im Wesentlichen deckungsgleich sind und/oder dass das zweite und vierte Areal oder das zweite und sechste Areal oder das vierte und sechste Areal oder das zweite, vierte und sechste Areal im Wesentlichen deckungsgleich sind.
